# EUROPEAN PATENT SPECIFICATION

(11) **EP 4 232 402 B1**
(45) Date of publication and mention of the grant of the patent: **26.11.2025**
(21) Application number: 21810445.3
(22) Date of filing: 19.10.2021
(51) Int. Cl.: B67D 1/08, B67D 7/02, F16F 1/00, B67D 1/04

(54) **SPRING-BIASED DISPENSING VALVE**
FEDERBELASTETES ABGABEVENTIL
SOUPAPE DE DISTRIBUTION SOLLICITÉE PAR RESSORT

(30) Priority: 20.10.2020 IT 202000024682; 27.10.2020 IT 202000025486
(43) Date of publication of application: 30.08.2023
(73) Proprietor: Covi, Emanuela, 39012 Merano (BZ) (IT)
(72) Inventor: Covi, Emanuela, 39012 Merano (BZ) (IT)
(74) Representative: Petraz, Davide Luigi
(86) International application number: PCT/IT2021/050340
(87) International publication number: WO 2022/085039

(56) References cited:
- EP-A2- 2 450 307
- WO-A1-03/050031
- WO-A1-2019/207613

## Description

### FIELD OF THE INVENTION

The present invention concerns a spring device for a valve unit for a container.

The containers in which the spring device associated with the valve unit can be used can be "keg" type containers with two coaxial bodies, of which an external container, or drum, has a support and protection function, and an internal container, or bag, is used to contain the beverage. The valve unit can be associated with a device to deliver the beverage.

The beverage can be extracted, in relation to how the two containers are made, either by pressing on the external container or by introducing a gas, for example pressurized air, between the external and internal container.

### BACKGROUND OF THE INVENTION

In the state of the art, valve units are known, to control and regulate a flow of fluid. Their use is widespread in various sectors and in numerous applications where it is necessary to selectively allow and prevent the passage of fluid under certain conditions of use.

Containers for fluids, in particular for beverages, are also known, comprising valve units and closing devices that allow the beverage to come out during a delivery step and allow the container to be closed when the delivery of the beverage is not required.

Such valve units can consist for example of a valve body and a spring device, provided with at least one elastic element able to compress if pressed by a delivery device associated with the container, or to relax if the delivery device is removed. A mobile sealing unit of the valve unit is associated with the elastic element. The mobile sealing unit substantially opens or closes the passage of the beverage from the inside to the outside of the container and therefore allows or does not allow the delivery of the beverage.

Substantially therefore, following the application of the delivery device, the mobile sealing unit of the valve unit moves downward, compressing the elastic element of the spring device and allowing the beverage to flow out. If the delivery device is removed, the mobile sealing unit of the valve unit rises again under the thrust of the elastic element, closing the passage for the beverage.

However, the use of this valve unit equipped with this spring device has some disadvantages. First, the elastic element in the compression and release steps tends to move in an imperfectly linear way, but, on the contrary, tends to assume an inclined position. This inclination of the elastic element entails, especially in the step of releasing and closing the passage of the beverage by the mobile sealing unit, an imperfect adherence of the mobile sealing unit to the aperture for the passage of the beverage. This leads to unwanted leakages of the beverage from the container.

Even if normally the delivery devices are removed from the valve unit when the beverage contained in the container is finished, in fact, it frequently happens that the delivery devices are extracted from the container, and decoupled from the valve unit, even when a certain quantity of beverage is still present in the container, for example for maintenance operations of the tapping system, or for replacing the container in use with another, for example containing a different beverage.

In these cases it is necessary for the spring device, no longer compressed by the delivery device, to quickly return to its original position in order to close the channel for the passage of the beverage, re-sealing the drum.

One disadvantage of known elastic devices is that they are unable to guarantee the rapid and effective closure of the passage channel.

This is more evident in elastic devices that have an elongated shape, or that comprise elastic elements, or springs, that are independent from each other, for which even small differences in the structure can entail an imperfect axiality of the spring device which can therefore deform and/or fail to maintain a position parallel to the longitudinal direction of the valve unit during the ascent step.

Consequently, it is possible that the spring device is unable to reposition itself in the correct initial position. In this case, the container is not perfectly sealed, and fissures may remain from which the beverage can leak, due to the pressure of the gas introduced, or air can enter, with a risk of compromising the organoleptic characteristics of the beverage.

Similar disadvantages also occur when, in the valve unit, any sealing lids are provided, included to protect the valve unit, which are detached during the first introduction of the delivery devices and connected to an upper portion of the spring device. In the release step, the sealing lids can in fact assume an oblique angle, with the risk of getting stuck against the walls and components of the valve unit, and of blocking the movement of the spring device, preventing the valve unit from closing.

This disadvantage is aggravated if the beverage container is used several times and therefore a delivery device is applied to the container several times, for example in the case of beer kegs that need to be subjected to maintenance operations or to allow them to be replaced with another container containing another type of beer, or other.

Document US-B-6,997,435 describes a valve unit comprising a spring device comprising an elastically deformable portion and a stem that is fixed with respect to the valve unit, around which the spring is disposed. This solution has the disadvantage that it requires a spring that is separate from a component defining a mobile head of the valve unit and requires a complex construction.

Document US-B.9,399,569 describes a valve unit comprising an elastically deformable and mobile portion with respect to a fixed central stem, separated from the elastic portion and which together with the latter defines a seating for the passage of a fluid.

Document EP2450307A2 discloses a beer keg valve including a port having a head portion and at least one leg extending downwardly from a lower surface and a spring element acting between the head portion and a support element.

Current spring devices for valve units are therefore not very reliable and not very precise in their functioning, even causing unwanted leakages of beverage from the container.

There is therefore a need to perfect a spring device for a valve unit for a container which can overcome at least one of the disadvantages of the state of the art.

In particular, one purpose of the present invention is to provide a spring device for a valve unit for a container which has a precise functioning and allows the valve unit with which it is associated to perform perfect and precise operations to open and close the passage of the beverage.

Another purpose of the present invention is to provide a spring device for a valve unit for a container which is provided with at least one elastic element which always has a linear motion, therefore free from undesired inclinations, during normal compression and release operations.

Another purpose of the present invention is therefore to provide a spring device for a valve unit for a container which can also be used frequently without negatively affecting the valve unit with which it is associated, especially with regard to sealing against unwanted leakages of liquid from the container.

Another purpose of the present invention is to provide a valve unit provided with an effective and precise spring device.

Another purpose of the invention is to provide a spring device which is able to exert a high elastic thrust force, and to close the aperture for the passage of the beverage quickly and effectively even several times in succession.

Another purpose is to perfect a spring device which is able to maintain the thrust force for a long time, guaranteeing the seal of the valve unit for the entire duration of the life cycle of the container, that is, from the moment it is filled to at least the entire time interval within the expiry date of the beverage itself, generally a few months.

Another purpose of the invention is to provide a spring device which guarantees a substantially uniform thrust pressure along its circumference.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a spring device for a valve unit for a container according to the present invention comprises at least one elastic element provided with a first terminal part associable with, or defining during use, a mobile head of the valve unit, in order to open and close a passage therein, and with a second terminal part associable during use with a support element provided in the valve unit.

According to one aspect of the invention, the elastic element is provided with at least one guide device directed in a direction of compression and release of the elastic element.

According to one aspect of the invention, the guide device is at least partly mobile, during use, in the direction of compression and release.

According to some embodiments, the guide device is connected to the first terminal part and is mobile in a manner integral therewith.

Advantageously, the present spring device, thanks to the guide device of the elastic element, has a precise functioning and allows the valve unit with which it is associated to perform perfect and precise operations to open and close the passage for the liquid.

The elastic element of the present spring device therefore always has a linear motion, therefore free from unwanted inclinations, during the normal compression and release operations.

The present spring device can therefore be used even frequently without negatively affecting the valve unit with which it is associated, especially with regards to sealing against unwanted leakages of liquids from the container.

According to another aspect of the invention, the guide device can be positioned inside the elastic element and coaxially thereto.

According to one embodiment, the guide device can comprise at least one tubular element positioned inside the elastic element.

The elastic element is configured to slide with respect to the tubular element in the direction of compression and release.

In particular, the tubular element is configured to stably maintain its shape and is not subjected to deformation, while the elastic element is configured to shorten and lengthen in the direction of compression and release.

The tubular element can be attached at one end to the first terminal part of the elastic element associated during use with the mobile head of the valve unit, while the other end remains free.

The second terminal part of the elastic element is provided with a through hole able to allow at least the passage of the free end of the tubular element.

In another embodiment, the guide device can be provided with a first tubular element and with a second tubular element, both positioned inside the elastic element and coaxially to the elastic element; the tubular elements are positioned substantially on opposite sides of the elastic element and are configured to reciprocally engage and to slide one on the other.

According to this embodiment, the first tubular element can be integral with the spring device, while the second tubular element can be integral with a support element of the valve unit associated with the valve body.

The guide device can comprise an end-of-travel element able to limit the reciprocal sliding of the tubular elements in the compression phase of the elastic element.

According to the present invention, the spring device comprises, in correspondence with the terminal part associated with the mobile head, radial guide elements configured to cooperate, during use, with a valve body of the valve unit and keep the terminal part in axis in the direction of compression and release.

The present invention also concerns a valve unit for a container, comprising at least one valve body in which a sealing seating is made configured to accommodate a mobile head for opening and closing the sealing seating.

The valve unit comprises a spring device as defined above, which is associated on one side with the mobile head and on the opposite side with a support element provided in the valve unit.

The terminal part of the spring device is associated with the bottom of the support.

According to some embodiments, on the bottom of the support element a through hole is made having a shape substantially mating with that of the individual tubular element, and suitable to allow the passage of the free end of the tubular element.

According to some variants, if the guide device is made in two components, the support element can comprise, integrated thereon, the second tubular element suitable to cooperate and engage with the first tubular element integral with the spring device.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is an exploded longitudinal section view of a spring device, according to a first embodiment of the present invention, for a valve unit for a container;
- fig. 2 is a three-dimensional view of the spring device of fig. 1;
- fig. 3 is a longitudinal section view of the spring device of fig. 1 in a position of closure of the valve unit;
- fig. 4 is a longitudinal section view of the spring device of fig. 1 in a position of opening of the valve unit;
- fig. 5 is an exploded longitudinal section view of a spring device, according to another embodiment of the present invention;
- fig. 6 is a longitudinal section view of the spring device of fig. 5 in a position of closure of the valve unit;
- fig. 7 is a longitudinal section view of the spring device of fig. 5 in a position of opening of the valve unit;
- fig. 8 is a longitudinal section view of a spring device according to another embodiment of the present invention in a position of closure of the valve unit;
- fig. 9 is a longitudinal section view of the spring device of fig. 8 in a position of opening of the valve unit;
- fig. 10 is a section view along line X-X of fig. 8;
- fig. 11 is a front view of the spring device of figs. 8-9;
- fig. 12 is a top view of the spring device of fig. 1;
- fig. 13 is a top view of a spring device according to one variant;
- fig. 14 is a lateral section view of a valve unit according to some variants described here in which the spring device of fig. 1 is inserted;
- fig. 14a is an enlarged detail of fig. 14;
- fig. 15 is a lateral section view of a valve unit with a spring device according to other embodiments described here.

To facilitate comprehension, the same reference numbers have been used, where possible, to identify identical common elements in the drawings. It is understood that elements and characteristics of one embodiment can conveniently be combined or incorporated into other embodiments without further clarifications.

### DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

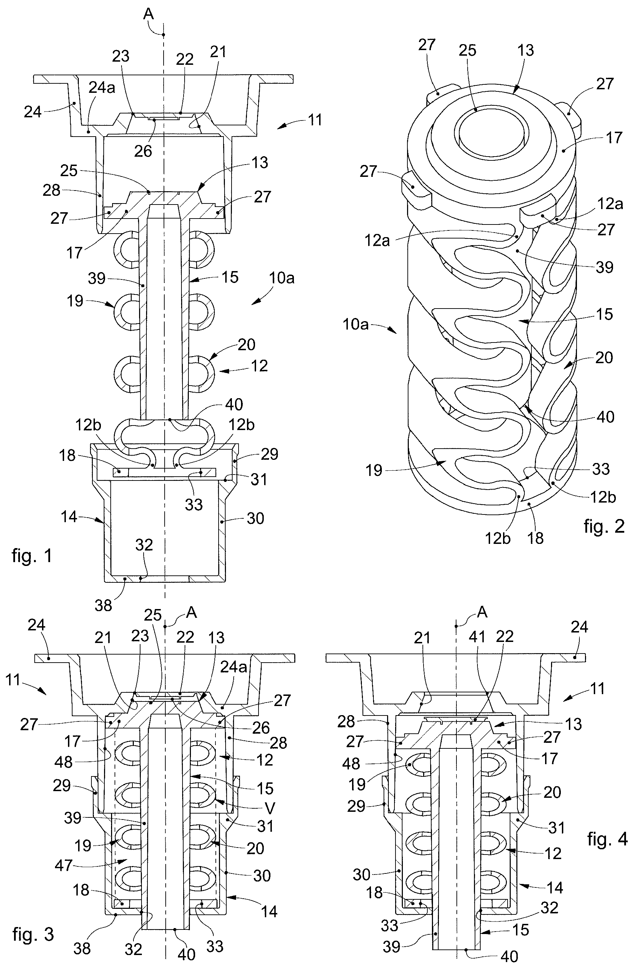

With reference to the attached drawings, see for example fig. 1 and fig. 2, a spring device 10a, 10b for a valve unit 11 for a container comprises at least one elastic element 12 provided with a first terminal part 17 associable with, or defining during use, a mobile head 13, or shutter portion, suitable to cooperate, during use, with a sealing seating 21 of the valve unit 11, and with a second terminal part 18 associable during use with a support element 14 provided in the valve unit 11.

The valve unit 11 according to the invention comprises the spring device 10a, 10b and a valve body 24 and possibly a support element 14.

The valve unit 11 can be placed in order to close a container and cooperate with suitable delivery devices to allow the delivery of the beverage or liquid.

In particular, the valve unit 11 can be used in a BIC type container (Bag-In-Container) comprising an external drum or keg and an internal bag, which can be obtained by blow molding preforms. By way of example, the container can contain a beverage, for example carbonated, such as beer or sparkling wine, or a non-alcoholic drink, or even a non-carbonated beverage, such as for example wine or other, or liquids of another type, such as for example water, oils, detergents, or suchlike.

The valve unit 11, in particular, is suitable to cooperate with delivery devices suitable to introduce a gas under pressure between the internal bag and the external drum, allowing the beverage or liquid to exit through the valve unit 11.

According to some embodiments, the material that the spring device 10a, 10b and the valve unit 11 consist of is advantageously PET, or any other plastic material whatsoever compatible with recycling.

According to some embodiments, described with reference to the drawings, the first terminal part 17 of the elastic element 12 is made in a single piece with the mobile head 13.

According to some variants, not shown, the mobile head 13 could be made as a separate component, but associable in a fixed and stable manner with the first terminal part 17.

The first terminal part 17 can be conformed as a divider ring and the mobile head 13 can be disposed coaxial to the divider ring and attached or connected in an integral manner to it.

The at least one elastic element 12 can be connected to the first terminal part 17 in correspondence with its upper ends 12a.

The elastic element 11 can be connected to the second terminal part 18 in correspondence with its lower ends 12b.

The first terminal part 17 can lie on a plane orthogonal to an axis X of longitudinal development of the spring device 10a, 10b.

The first terminal part 17 can have an annular edge from which the mobile head 13 extends, on the opposite side with respect to the elastic element 12.

According to one aspect of the invention, the elastic element 12 is provided with at least one guide device 15 directed in the direction A of compression and release of the elastic element 12.

According to one aspect of the invention, the guide device 15 is mobile, during use, in the direction A of compression and release.

The guide device 15 is preferably connected to the terminal part 17 and is mobile in a manner integral therewith. This conformation guarantees a correct positioning of the terminal part 17 with respect to the seating 21 along its travel.

The spring device 10a, 10b has an oblong shape, that is, an extension in a direction A greater than its transverse sizes, in order to allow to exert and/or contrast a strong elastic thrust force concentrated on the mobile head 13, that is, on the shutter portion.

The spring device 10a, 10b is configured to compress and extend along an axis X and therefore axially with respect to the valve body 24 and to the valve unit. In particular, the elastic element 12 is configured to generate the desired thrust of the mobile head 12 toward the seating 21 and the aperture 41 for the passage of a fluid provided in the valve body 24.

According to some embodiments, the elastic element 12 is conformed in such a way as to remain, at least in an uncompressed position, within a substantially cylindrical virtual volume V, the transverse sizes of which are defined by the divider ring 17.

As will be better described below, the elastic element 12 can comprise a single spring, or consist of a plurality of spring elements, which are independent or connected to each other. Both in the case of a single spring and also in the case of a plurality of spring elements, these will be conformed as a whole in order to remain within a cylindrical volume V, the sizes of which are coherent with the first terminal part 17. The at least one elastic element 12 can have an oblong shape, that is, an extension along the axis X greater than its sizes transverse to the axis X, in order to allow to exert and/or contrast a strong elastic thrust force concentrated on the shutter portion, or mobile head 13.

According to some embodiments, the elastic element 12 has a diameter comprised between about 0.25 and 0.5 times its length. In other words, the elastic element 12 is conformed in such a way as to remain within a space defined by a virtual volume V having a diameter comprised between 0.25 and 0.5 times the overall length of the spring device 10a, 10b. For example, in the case of an elastic element 12 having a length comprised between 70 and 90 mm, the virtual volume V can correspond to a cylinder comprised between 25 and 40 mm, advantageously around 30 mm, but it can also have other compatible sizes as a function of the application of the spring device 10a, 10b.

For example, the elastic element 12 can be configured to exert an elastic thrust force varying between 5N and 30N.

The elastic element 12 can be any elastic element whatsoever able to be compressed and released in the direction A. In the example shown, the terminal parts 17 and 18 are substantially load dividing rings to which two zig-zag springs 19 and 20, which are linear and independent of each other, are stably connected. The zig-zag springs 19 and 20 are provided with a series of coils located in sequence.

The use of zig-zag springs 19 and 20 allows to have a high compression and release force directed in the direction A. The number and conformation of the zig-zag springs 19 and 20 can even be different from what is shown.

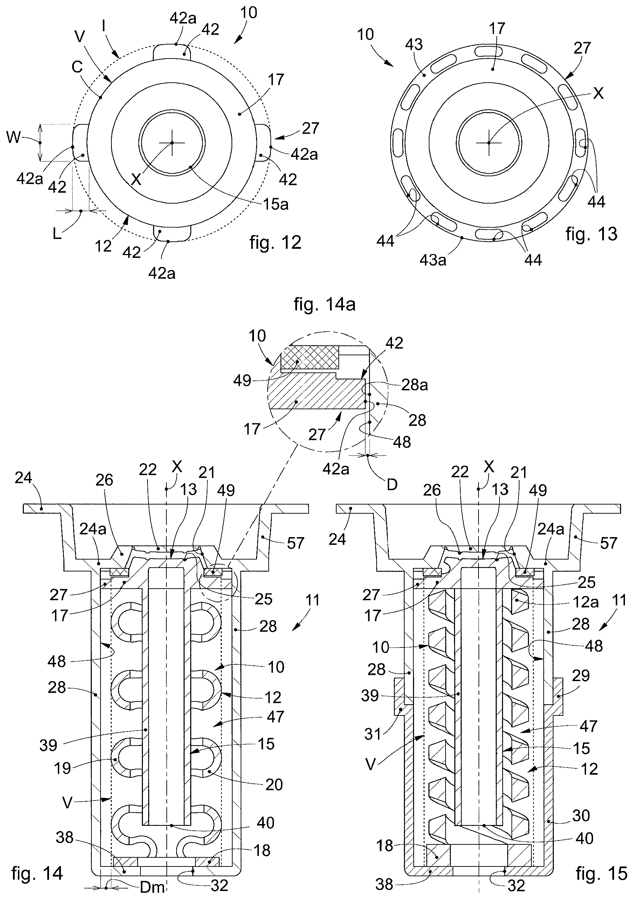

Furthermore, other types of elastic elements 12 could be provided, such as for example spiral springs (fig. 15) or other. According to some embodiments, the two or more springs can be conformed with different geometries, so that it is possible to have undulations, linear zig-zag shapes, arcuate zig-zag shapes, waves with positive and/or negative developments, or a combination thereof.

According to other variants, two spiral or helical springs can also be provided, disposed concentric to each other and counter-rotating, that is, with the spirals wound in opposite directions, exerting the same thrust force against the terminal parts 17, 18.

According to some embodiments, the spring device 10 advantageously comprises an internal compartment 47 with a substantially cylindrical shape through which, during use, the beverage to be delivered can pass.

The guide device 15 can comprise, for example, an oblong element 39, 139 positioned inside the elastic element 12 and coaxially to the elastic element 12.

According to some embodiments, described with reference to figs. 1-7 and 14-15, the oblong element 39 has a preferably tubular shape, with a section having a substantially convex shape, for example circular, oval or polygonal, or with a combination of curved and rectilinear segments.

The guide device 15 could comprise a tubular oblong element positioned outside the elastic element 12, in combination with or as an alternative to the internal tubular oblong element 39. The guide device 15 can be associated or made in a single piece with the mobile head 13 or with the terminal part 17.

According to some embodiments, a single oblong element 39, 139 is provided which has an axial extension greater than or equal to 50% of the overall extension of the elastic element 12 in an uncompressed configuration. Preferably, the extension of the tubular element is comprised between 50% and 80%, even more preferably between 60% and 70%.

The elastic element 12, in whichever way it is produced, therefore by means of zig-zag springs 19 and 20 or other, is able to slide with respect to the surface of the oblong element 39, 139.

The mobile head 13 of the valve unit 11 is able to be inserted with a fluidic seal into a sealing seating 21, which is initially closed by a lid 22 connected to the sealing seating 21 by means of a rupture line 23. The sealing seating 21 is made in the valve body 24 of the valve unit 11.

According to some embodiments, the valve body 24 comprises an upper wall 24a, in which the aperture 41 for the passage of the beverage can be made. The valve body 24 also comprises a substantially cylindrical lateral wall 28 which extends below the upper wall 24a, coaxial to the aperture 41. The lateral wall 28 defines a housing cavity 48 for the spring device 10.

Advantageously, the housing cavity 48 has a diameter greater than the virtual volume V inside which the elastic element 12 is defined, at least at rest. In particular, the diameter of the housing cavity 48 is comprised between 10% and 20% more than the diameter of the volume V containing the elastic element 12, in such a way as to provide sufficient clearance for the latter to be able to compress and deform during the insertion of the delivery devices.

According to some embodiments, there is an internal packing 49, suitable to act as a seal for the terminal part 17, disposed below the upper wall 24a.

The mobile head 13 can preferably comprise, in a central zone, an annular groove 25 able to accommodate a ring 26 protruding from the lid 22.

The terminal part 17 can also be inserted in a cylindrical element 28 of the valve body 24 and comprises positioning and guiding means 27 able to slide along the cylindrical element 28 in order to keep the terminal part 17 in a position substantially orthogonal to the direction A of compression and release, so as to guarantee a correct closure of the sealing seating 21.

The terminal part 18 is associated with the support element 14, which can be made in a single body with the valve body 24 or be made as a separate entity that can be connected to the valve body 24.

According to some embodiments, the support element 14 can be substantially a cup-shaped element or suchlike, see also figs. 3 and 4 and 8-9.

The support element 14 can comprise a first cylindrical element 29 with a larger internal diameter and a second cylindrical element 30 with a smaller internal diameter. An annular step 31 is made between the cylindrical elements 29 and 30 on which the end of the cylindrical element 28 associated with the valve body 24 rests when the assembly of the valve unit 11 is completed.

The support element 14 can also comprise a bottom 38 provided with a through hole 32 aligned with a through hole 33 made in the terminal part 18.

In the embodiments shown in figs. 3-4 and 6-7, the terminal part 18 substantially rests on the bottom 38 of the support 14.

The terminal part 18 can be attached in a stable manner to the bottom 38 of the support element 14, or simply located in contact therewith.

As can be seen in fig. 3, when the assembly is complete, the elastic element 12 is already partly pre-compressed, and a free end 40 of the oblong element 39 on which the elastic element 12 can slide at least partly passes through the through hole 33 made in the terminal part 18. The free end 40 will also pass through the through hole 32 made on the bottom 38 of the support element 14.

The mobile head 13 is inserted with a fluidic seal in the sealing seating 21, which is temporarily closed by means of the lid 22.

Fig. 4 shows a configuration of the spring device 10a in a situation in which the valve unit 11 allows the passage of a liquid through the sealing seating 21. This passage is allowed by applying a delivery device, not shown, which is inserted in the valve body 24 and presses on the lid 22 in such a way as to remove it along the rupture line 23.

The ring 26 made in the lid 22, see also fig. 3, is then inserted, by means of pressure operated by the delivery device, into the annular groove 25 of the mobile head 13, therefore the lid 22 is associated with the mobile head 13, as shown in fig. 4. In this phase, therefore, the elastic element 12 is compressed in the direction A and along the guide device 15 with respect to what is shown in fig. 3.

Once the liquid has been delivered, the delivery device is removed from the valve body 24 of the valve unit 11, then the mobile head 13 rises back to the position of fig. 3, thanks to the action of the elastic element 12 which, since it is no longer pressed by the delivery device, extends once again in the direction A sliding along the guide device 15, thus keeping the first terminal part 17 and the mobile head 13 in axis, with a position substantially orthogonal to the direction A. The mobile head 13 will then once again return to the position of fig. 2 or fig. 3, closing the sealing seating 21 correctly.

Then, the elastic element 12 will move in the direction A, both in compression and also in release, suitably guided by the guide device 15, without undergoing unwanted inclinations with respect to the direction A and thus guaranteeing a precise movement of the mobile head 13.

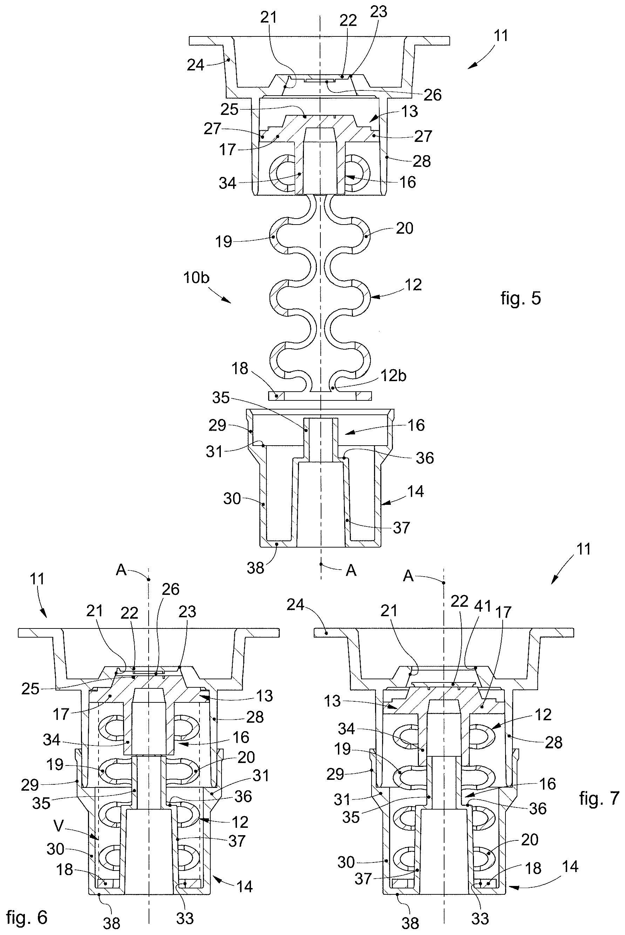

Fig. 5 shows another embodiment of the spring device 10b according to the present invention.

The spring device 10b comprises a guide device 16 which can be provided with a first oblong element 34 positioned inside the elastic element 12 and coaxially to the elastic element 12, and with a second oblong element 35 positioned inside the support element 14 and aligned with the first tubular element 34.

In this example, the first oblong element 34 is integral with the terminal part 17 and is mobile together with the mobile head 13, while the second oblong element 35 is fixed and integral with the support element 14.

The oblong elements 34 and 35 are substantially positioned on opposite sides of the elastic element 12 and are configured to reciprocally engage and slide one on the other, see for example fig. 7.

For example, it is possible to provide that both the first 34 and also the second oblong element 35 have a tubular shape and that the first oblong element 34 has an internal diameter greater than the external diameter of the second oblong element 35, therefore the first oblong element 34 is at least partly fitted on the second oblong element 35 in such a way as to slide along the second oblong element 35.

Naturally, it could also be provided that the second tubular oblong element 35 has an internal diameter greater than the external diameter of the first tubular oblong element and therefore that the first tubular oblong element 34 is at least partly inserted in the second tubular oblong element 35.

According to one variant, it can be provided that one of either the first 34 or the second oblong element 35 has a tubular shape or is generally provided with an internal cavity, and the other one of either the second 35 or the first oblong element 34 has a star shape or is shaped in an alternative way, suitable to slide in the cavity.

According to some embodiments, it can be provided that the guide element 16 can extend overall for at least 50% of the overall extension of the elastic element 12 in an uncompressed configuration. Preferably, the overall extension, given by the sum of the first 34 and the second tubular element 35, is comprised between 50% and 80%, even more preferably between 60% and 70% of the extension of the uncompressed elastic element 12.

In the situation of fig. 6, similarly to the situation of fig. 3, the valve unit 11 is in the assembled situation in which the elastic element 12 is pre-compressed. In this case, the tubular elements 34 and 35 could already be partly associated with, or be disposed in proximity to, each other, as shown in the drawing.

The guide device 16 could also provide an end-of-travel element 36 which limits the sliding of the tubular elements 34 and 35 in the compression phase of the elastic element 12.

The end-of-travel element 36 could be an annular step made between another tubular element 37 associated with the bottom of the support element 14 and the second tubular element 35. In this case, the tubular element 37 will have an external diameter greater than the external diameter of the tubular element 35. The terminal part 18 of the elastic element 12 can be fitted on the tubular element 37 by means of the corresponding through hole 33 with which the terminal part 18 is provided.

The functioning of the valve unit 11 provided with the guide device 16 is similar to what described with reference to figs. 3 and 4 in which the guide device 15 is provided.

Therefore, in both cases, thanks to the guide devices 15 or 16, the elastic element 12 of the spring device 10a, 10b is guided correctly and precisely in the direction A, both in the compression phase and also in the release phase of the elastic element 12, that is, in the return phase of the mobile head 13 to the position of closure of the valve unit 11.

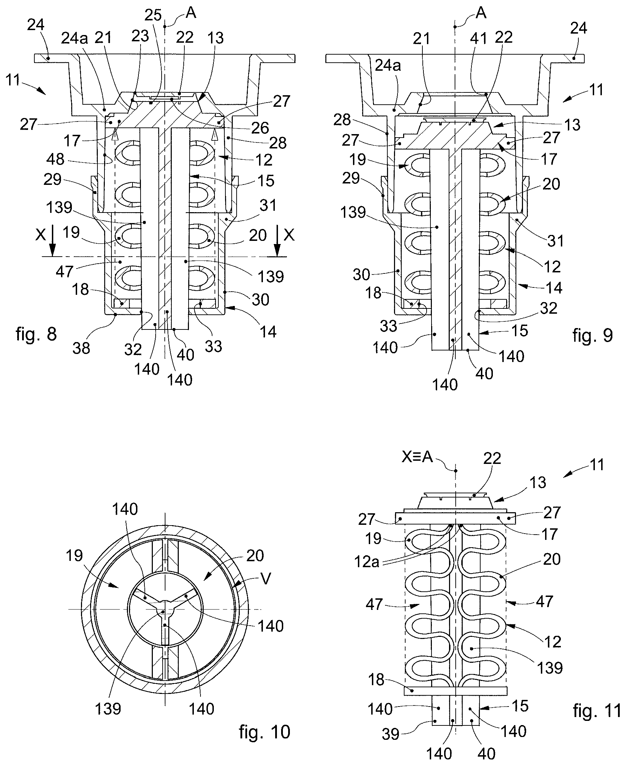

The embodiments shown in figs. 8-11 differ from the embodiments of figs. 1-4 only for the shape of the guide device 15, while the other components are substantially the same and will not be described further.

According to this embodiment, the guide device 15 can comprise an oblong element 139 positioned inside the elastic element 12 and coaxially to the elastic element 12.

In this case, the oblong element 139 is substantially star shaped and can comprise a plurality of radial walls 140, preferably three or more, which extend radially with respect to a common central axis X which coincides with the direction A of compression and release. This solution is particularly advantageous since it allows a better oxygenation of the beverage during production. In fact, with a tubular oblong element 39 it can happen that when the container is closed, an excess of oxygen O₂ may remain inside it, resulting in the generation of air bubbles in the glass.

Figs. 12-13 show possible variants of the positioning and guiding means 27.

According to some embodiments, which do not form part of the present invention, it can also be provided that the spring device 10 comprises only the positioning and guiding means 27 without the guide device 15, 16.

According to one aspect of the present invention, the terminal part 17 comprises at least one positioning element 42, 43 which extends radially beyond an external perimeter of the divider ring of the terminal part 17.

The positioning element 42, 43 extends on a plane orthogonal with respect to the axis X.

The terminal part 17 including the positioning element 42, 43 consequently has, on a plane orthogonal to the longitudinal direction X, an overall size I larger than the virtual cylinder C defined by the elastic element 12 (fig. 12).

The positioning element 42, 43 is able to keep the spring device 10 aligned in axis with respect to the valve body 24 so that it moves sliding and axially with respect to the valve unit 11.

The positioning element 42, 43 can have a length L in the radial direction for example comprised between about 5% and 15% of the diameter of the terminal part 17.

The positioning element 42, 43 is configured to cooperate, during use, with a lateral wall 28 of the valve body 24, and therefore of the valve unit 11, in such a way as to keep the terminal part 17 and therefore the mobile part, or shutter portion 13, correctly aligned on a plane orthogonal to the axis X, both during the compression phases of the spring device 10 during the insertion of the delivery devices, and also, above all, during the extension phase of the spring device 10 following their removal.

This prevents the mobile part 13 from assuming an oblique position which could compromise the correct closure of the aperture 41 of the valve body 24.

According to some embodiments, between an external face 42a, 43a of the positioning element 13 and an internal surface 28a of the lateral wall 28 of the valve body 24 there can be defined a minimum distance D such as to define a clearance sufficient to allow the sliding and axial movement of the spring device 10 with respect to the valve body 24 (fig. 15a). The clearance can also be such as not to allow the terminal part 17 of the spring device 10 to tilt. Indicatively, the distance D can be comprised between 0.1 and 2 mm, preferably smaller than or equal to 1.5 mm, even more preferably smaller than or equal to 1 mm.

Advantageously, it is in this way possible to limit the clearance between the terminal part 17 of the spring device 10 and the lateral wall 28 of the valve body 24. It is also possible to constrain the terminal part 17 of the spring device 10 to move while substantially maintaining an orientation parallel to the axis X.

The diameter of the housing cavity 48 is substantially correlated to that of the overall size I of the positioning element 42, 43.

According to some embodiments, the housing cavity 48 has, preferably but not exclusively, a cylindrical shape with a constant section at least in correspondence with the travel of the positioning element 42, 43.

Advantageously, it is in this way possible to maintain the same distance D between the external face 42a, 43a of the positioning element 42, 43 and the internal face 28a of the lateral wall 28 for the entire travel of the positioning element 42, 43.

According to some embodiments, not shown, the housing cavity 48 can have recesses or protrusions, for example some ribs or sliding channels, in correspondence with the positioning element 42, 43 and its travel. In this way, it is possible to maintain the same distance D between the external face 42a, 43a and the internal face 28a at least in correspondence with such recesses or protrusions.

According to some embodiments, between the lateral wall 28 and an external surface 42a, 43a of the elastic element 12 there is a maximum distance Dm comprised between 2 and 5 times the minimum distance D.

According to some embodiments, the positioning element can be in the form of fins 42 distributed on an external circumference C of the terminal part 17, and in particular on an external circumference C thereof.

According to some embodiments, the positioning element comprises at least three protruding fins 42, equally distanced around the axis X, for example positioned at an angle of 120° each one from the other, so as to provide a correct centering for the terminal part 17 over its entire circumference.

The number of fins 42 can be even greater than three, for example four, as shown in figs. 2, 12, or even a larger number, for example comprised between five and ten.

The fins 42 can be distributed regularly, that is, at a constant distance from each other, or with irregular distances.

According to some embodiments, the fins 42 can have a width W in the circumferential direction sufficient to guarantee the strength thereof, so that they are not damaged in the movement of the spring device 10, but at the same time allow the passage of the beverage or liquid present in the container with which the valve unit 11 is associated toward the aperture 41 of the valve body 24.

The fins 42 can have the same or a different width W. Indicatively, the sum of the widths W can for example be such as to be smaller than 3/4 of the external circumference C of the terminal part 17. Preferably, the sum of the widths W is such as to be substantially smaller than 1/2 of the external circumference C.

According to one variant, shown by way of example in fig. 13, the positioning element 43 can be configured as a single continuous ring projecting in continuity with the divider ring of the terminal part 17.

According to this embodiment, there can be provided holes 44 and/or slits passing through the ring 43, suitable for the passage of the beverage or other liquid.

According to some embodiments, the divider rings 14, 16 lie on respective planes parallel to each other and orthogonal to the axis X.

According to some embodiments, the shutter portion 15 has a shape at least partly mating with a seating 53, provided in the upper wall 51 of the valve body 50. Advantageously, the shutter portion 15 is therefore configured to couple to the seating 53 in order to selectively close the valve unit 100 when the beverage, or other liquid, passes.

According to one possible embodiment, the shutter portion 15 has a truncated cone shape. As another example, the shutter portion 15 can have a cylindrical or domed shape, or any other shape whatsoever suitable to couple to the seating 53 in a mating way.

It is clear that modifications and/or additions of parts may be made to the spring device 10a, 10b as described.

## Claims

1. Spring device (10a; 10b) for a valve unit (11) for a container, comprising at least one elastic element (12) provided with a first terminal part (17) associable with, or defining during use, a mobile head (13) of the valve unit (11), and with a second terminal part (18) associable during use with a support element (14) provided in said valve unit (11), wherein said elastic element (12) is provided with at least one guide device (15, 16) directed in a direction (A) of compression and release of said elastic element (12) and mobile, during use, in said direction (A) of compression and release, **characterized in that** said first terminal part (17) comprises positioning and guiding radial means (27).

2. Spring device (10a; 10b) as in claim 1, **characterized in that** said guide device (15, 16) is connected to said first terminal part (17) and is mobile in a manner integral therewith.

3. Spring device (10a; 10b) as in claim 1 or 2, **characterized in that** said guide device (15) comprises at least one oblong element (39, 34, 139) positioned inside said elastic element (12), said elastic element (12) being configured to slide with respect to said oblong element (39, 34) in said direction (A) of compression and release.

4. Spring device (10a) as in claim 3, **characterized in that** a single oblong element (39; 139) is provided, attached at one end to said first terminal part (17), while the other end (40) remains free and said second terminal part (18) of said elastic element (12) is provided with a through hole (33) able to allow at least the passage of said free end (40).

5. Spring device (10a) as in claim 4, **characterized in that** said oblong element (39) has a circular, oval or polygonal section and preferably has a tubular shape.

6. Spring device (10a) as in claim 4, **characterized in that** said oblong element (139) has a star-shaped section with three or more radial walls (140) extending radially with respect to a common central axis.

7. Spring device (10b) as in any claim from 1 to 3, **characterized in that** said guide device (16) is provided with a first tubular oblong element (34) and with a second tubular oblong element (35) which are both positioned inside the elastic element (12) and coaxially to said elastic element (12), said oblong elements (34, 35) being positioned substantially on opposite sides of said elastic element (12) and configured to reciprocally engage and slide one with respect to the other.

8. Spring device (10b) as in claim 7, **characterized in that** said guide device (16) comprises an end-of-travel element (36) able to limit the reciprocal sliding of said oblong elements (34, 35) in the compression phase of the elastic element (12).

9. Spring device (10a; 10b) as in any claim hereinbefore, **characterized in that** said guide device (15; 16) extends overall for at least 50% of the total extension of said elastic element (12) in the uncompressed configuration.

10. Spring device (10a, 10b) as in any claim hereinbefore, **characterized in that** said positioning and guiding radial means (27) comprise at least three fins (42) distributed on an external circumference (C) of said first terminal part (17).

11. Spring device (10a, 10b) as in any claim 1 to 9, **characterized in that** said positioning and guiding radial means (27) comprise a ring (43) projecting in continuity from the first terminal part (17) in which there are provided holes (44) and/or through slits suitable for the passage of a beverage or liquid.

12. Valve unit (11) for a container, comprising at least one valve body (24) in which a sealing seating (21) is made configured to accommodate a mobile head (13) for opening and closing said sealing seating (21), **characterized in that** said valve unit comprises a spring device (10a, 10b) as in any claim hereinbefore associated with, or defining, on one side, said mobile head (13) and on the opposite side associated with a support element (14) provided in said valve unit (11).

13. Valve unit (11) as in claim 12, **characterized in that** it comprises a spring device (10a) as in any claim from 1 to 6 or 9-11, wherein the second terminal part (18) of said spring device (10a) is associated with a bottom (38) of the support element (14) and on said bottom (38) a through hole (32) is made, suitable to cooperate with a free end (40) of said guide device (15).

14. Valve unit (11) as in claim 12, **characterized in that** said support element (14) comprises a spring device (10b) as in any one of claims 1-4 or 8-11, wherein the second terminal part (18) of said spring device (10b) is associated with a bottom (38) of the support element (14) and wherein a first oblong element (34) is integral with said first terminal part (17) and said second oblong element (35) is integral with said support element (14).

## Patentansprüche

1. Federvorrichtung (10a; 10b) für eine Ventileinheit (11) für einen Behälter, umfassend mindestens ein elastisches Element (12), das mit einem ersten Endabschnitt (17) versehen ist, der mit einem beweglichen Kopf (13) der Ventileinheit (11) verbunden werden kann oder diesen während des Gebrauchs definiert, und mit einem zweiten Endabschnitt (18) versehen ist, der während des Gebrauchs mit einem in der Ventileinheit (11) vorgesehenen Stützelement (14) verbunden werden kann, wobei das elastische Element (12) mit mindestens einer Führungsvorrichtung (15, 16) versehen ist, die in einer Kompressions- und Entspannungsrichtung (A) des elastischen Elements (12) ausgerichtet und während des Gebrauchs in dieser Kompressions- und Entspannungsrichtung (A) beweglich ist, **dadurch gekennzeichnet, dass** der erste Endabschnitt (17) radiale Positionierungs- und Führungsmittel (27) umfasst.

2. Federvorrichtung (10a; 10b) nach Anspruch 1, **dadurch gekennzeichnet, dass** die Führungsvorrichtung (15, 16) mit dem ersten Endabschnitt (17) verbunden und in einer damit integralen Weise beweglich ist.

3. Federvorrichtung (10a; 10b) nach Anspruch 1 oder 2, **dadurch gekennzeichnet, dass** die Führungsvorrichtung (15) mindestens ein längliches Element (39, 34, 139) umfasst, das innerhalb des elastischen Elements (12) positioniert ist, wobei das elastische Element (12) so konfiguriert ist, dass es in Bezug auf das längliche Element (39, 34) in der Kompressions- und Entspannungsrichtung (A) gleitet.

4. Federvorrichtung (10a) gemäß Anspruch 3, **dadurch gekennzeichnet, dass** ein einziges längliches Element (39; 139) vorgesehen ist, das an einem Ende an dem ersten Endabschnitt (17) befestigt ist, während das andere Ende (40) frei bleibt, und der zweite Endabschnitt (18) des elastischen Elements (12) mit einer Durchgangsöffnung (33) versehen ist, die zumindest den Durchgang des freien Endes (40) ermöglicht.

5. Federvorrichtung (10a) nach Anspruch 4, **dadurch gekennzeichnet, dass** das längliche Element (39) einen kreisförmigen, ovalen oder polygonalen Querschnitt aufweist und vorzugsweise röhrenförmig ist.

6. Federvorrichtung (10a) nach Anspruch 4, **dadurch gekennzeichnet, dass** das längliche Element (139) einen sternförmigen Querschnitt mit drei oder mehr radialen Wänden (140) aufweist, die sich radial in Bezug auf eine gemeinsame Mittelachse erstrecken.

7. Federvorrichtung (10b) nach irgendeinem der Ansprüche 1 bis 3, **dadurch gekennzeichnet, dass** die Führungsvorrichtung (16) mit einem ersten röhrenförmigen länglichen Element (34) und einem zweiten röhrenförmigen länglichen Element (35) versehen ist, die beide innerhalb des elastischen Elements (12) und koaxial zu dem elastischen Element (12) angeordnet sind, wobei die länglichen Elemente (34, 35) im Wesentlichen auf gegenüberliegenden Seiten des elastischen Elements (12) positioniert und so konfiguriert sind, dass sie ineinander greifen und relativ zueinander gleiten.

8. Federvorrichtung (10b) nach Anspruch 7, **dadurch gekennzeichnet, dass** die Führungsvorrichtung (16) ein Endanschlagelement (36) umfasst, das in der Lage ist, das wechselseitige Gleiten der länglichen Elemente (34, 35) in der Kompressionsphase des elastischen Elements (12) zu begrenzen.

9. Federvorrichtung (10a; 10b) nach irgendeinem der vorstehenden Ansprüche, **dadurch gekennzeichnet, dass** sich die Führungsvorrichtung (15; 16) insgesamt über mindestens 50 % der Gesamtlänge des elastischen Elements (12) in der nicht komprimierten Konfiguration erstreckt.

10. Federvorrichtung (10a, 10b) nach irgendeinem der vorstehenden Ansprüche, **dadurch gekennzeichnet, dass** die radialen Positionierungs- und Führungsmittel (27) mindestens drei Rippen (42) umfassen, die auf einem Außenumfang (C) des ersten Endabschnitts (17) verteilt sind.

11. Federvorrichtung (10a, 10b) nach irgendeinem der Ansprüche 1 bis 9, **dadurch gekennzeichnet, dass** die radialen Positionierungs- und Führungsmittel (27) einen Ring (43) umfassen, der sich in Kontinuität vom ersten Endabschnitt (17) erstreckt, in dem Löcher (44) und/oder Durchgangsschlitze vorgesehen sind, die für den Durchfluss eines Getränks oder einer Flüssigkeit geeignet sind.

12. Ventileinheit (11) für einen Behälter, umfassend mindestens einen Ventilkörper (24), in dem ein Dichtsitz (21) ausgebildet ist, der so konfiguriert ist, dass er einen beweglichen Kopf (13) zum Öffnen und Schließen des Dichtsitzes (21) aufnehmen kann, **dadurch gekennzeichnet, dass** die Ventileinheit eine Federvorrichtung (10a, 10b) gemäß irgendeinem der vorstehenden Ansprüche umfasst, die auf einer Seite mit dem beweglichen Kopf (13) verbunden ist oder diesen definiert und auf der gegenüberliegenden Seite mit einem in der Ventileinheit (11) vorgesehenen Stützelement (14) verbunden ist.

13. Ventileinheit (11) nach Anspruch 12, **dadurch gekennzeichnet, dass** sie eine Federvorrichtung (10a) gemäß irgendeinem der Ansprüche 1 bis 6 oder 9 bis 11 umfasst, wobei der zweite Endabschnitt (18) der Federvorrichtung (10a) mit einem Boden (38) des Stützelements (14) verbunden ist und in diesem Boden (38) eine Durchgangsöffnung (32) ausgebildet ist, die mit einem freien Ende (40) der Führungsvorrichtung (15) zusammenwirken kann.

14. Ventileinheit (11) gemäß Anspruch 12, **dadurch gekennzeichnet, dass** das Stützelement (14) eine Federvorrichtung (10b) gemäß irgendeinem der Ansprüche 1 bis 4 oder 8 bis 11 umfasst, wobei der zweite Endabschnitt (18) der Federvorrichtung (10b) mit einem Boden (38) des Stützelements (14) verbunden ist, und wobei ein erstes längliches Element (34) einstückig mit dem ersten Endabschnitt (17) ausgebildet ist und das zweite längliche Element (35) einstückig mit dem Stützelement (14) ausgebildet ist.

## Revendications

1. Dispositif à ressort (10a ; 10b) pour une unité de soupape (11) pour un récipient, comprenant au moins un élément élastique (12) pourvu d'une première partie terminale (17) pouvant être associée à, ou définissant en utilisation, une tête mobile (13) de l'unité de soupape (11), et d'une seconde partie terminale (18) pouvant être associée en utilisation à un élément de support (14) prévu dans ladite unité de soupape (11), dans lequel ledit élément élastique (12) est pourvu d'au moins un dispositif de guidage (15, 16) dirigé dans une direction (A) de compression et de libération dudit élément élastique (12) et mobile, en utilisation, dans ladite direction (A) de compression et de libération, **caractérisé en ce que** ladite première partie terminale (17) comprend des moyens radiaux de positionnement et de guidage (27).

2. Dispositif à ressort (10a ; 10b) selon la revendication 1, **caractérisé en ce que** ledit dispositif de guidage (15, 16) est connecté à ladite première partie de borne (17) et est mobile d'une manière solidaire avec celle-ci.

3. Dispositif à ressort (10a ; 10b) selon la revendication 1 ou 2, **caractérisé en ce que** ledit dispositif de guidage (15) comprend au moins un élément oblong (39, 34, 139) positionné à l'intérieur dudit élément élastique (12), ledit élément élastique (12) étant configuré pour coulisser par rapport audit élément oblong (39, 34) dans ladite direction (A) de compression et de libération.

4. Dispositif à ressort (10a) selon la revendication 3, **caractérisé en ce qu'**un seul élément oblong (39 ; 139) est prévu, fixé à une extrémité à ladite première partie terminale (17), tandis que l'autre extrémité (40) reste libre et ladite seconde partie terminale (18) dudit élément élastique (12) est pourvue d'un trou traversant (33) capable de permettre au moins le passage de ladite extrémité libre (40).

5. Dispositif à ressort (10a) selon la revendication 4, **caractérisé en ce que** ledit élément oblong (39) présente une section circulaire, ovale ou polygonale et présente de préférence une forme tubulaire.

6. Dispositif à ressort (10a) selon la revendication 4, **caractérisé en ce que** ledit élément oblong (139) présente une section en forme d'étoile avec trois parois radiales ou plus (140) s'étendant radialement par rapport à un axe central commun.

7. Dispositif à ressort (10b) selon l'une quelconque des revendications 1 à 3, **caractérisé en ce que** ledit dispositif de guidage (16) est pourvu d'un premier élément oblong tubulaire (34) et d'un second élément oblong tubulaire (35) qui sont tous deux positionnés à l'intérieur de l'élément élastique (12) et coaxialement audit élément élastique (12), lesdits éléments oblongs (34, 35) étant positionnés sensiblement sur des côtés opposés dudit élément élastique (12) et configurés pour venir en prise mutuellement et coulisser l'un par rapport à l'autre.

8. Dispositif à ressort (10b) selon la revendication 7, **caractérisé en ce que** ledit dispositif de guidage (16) comprend un élément de fin de course (36) capable de limiter le coulissement réciproque desdits éléments oblongs (34, 35) dans la phase de compression de l'élément élastique (12).

9. Dispositif à ressort (10a ; 10b) selon l'une quelconque des revendications précédentes, **caractérisé en ce que** ledit dispositif de guidage (15 ; 16) s'étend globalement sur au moins 50 % de l'extension totale dudit élément élastique (12) dans la configuration non comprimée.

10. Dispositif à ressort (10a, 10b) selon l'une quelconque des revendications précédentes, **caractérisé en ce que** lesdits moyens radiaux de positionnement et de guidage (27) comprennent au moins trois ailettes (42) réparties sur une circonférence externe (C) de ladite première partie terminale (17).

11. Dispositif à ressort (10a, 10b) selon l'une quelconque des revendications 1 à 9, **caractérisé en ce que** lesdits moyens radiaux de positionnement et de guidage (27) comprennent une bague (43) faisant saillie dans la continuité de la première partie terminale (17) dans laquelle sont prévus des trous (44) et/ou des fentes traversantes appropriées pour le passage d'une boisson ou d'un liquide.

12. Unité de soupape (11) pour un récipient, comprenant au moins un corps de soupape (24) dans lequel un siège d'étanchéité (21) est configuré pour recevoir une tête mobile (13) pour ouvrir et fermer ledit siège d'étanchéité (21), **caractérisée en ce que** ladite unité de soupape comprend un dispositif à ressort (10a, 10b) selon l'une quelconque des revendications précédentes associé à, ou définissant, sur un côté, ladite tête mobile (13) et sur le côté opposé associé à un élément de support (14) prévu dans ladite unité de soupape (11).

13. Unité de soupape (11) selon la revendication 12, **caractérisée en ce qu'**elle comprend un dispositif à ressort (10a) selon l'une quelconque des revendications 1 à 6 ou 9 à 11, dans laquelle la seconde partie terminale (18) dudit dispositif à ressort (10a) est associée à un fond (38) de l'élément de support (14) et sur ledit fond (38) est réalisé un trou traversant (32), approprié pour coopérer avec une extrémité libre (40) dudit dispositif de guidage (15).

14. Unité de soupape (11) selon la revendication 12, **caractérisée en ce que** ledit élément de support (14) comprend un dispositif à ressort (10b) selon l'une quelconque des revendications 1 à 4 ou 8 à 11, dans laquelle la seconde partie terminale (18) dudit dispositif à ressort (10b) est associée à un fond (38) de l'élément de support (14) et dans laquelle un premier élément oblong (34) est solidaire de ladite première partie terminale (17) et ledit second élément oblong (35) est solidaire dudit élément de support (14).
